# EUROPÄISCHE PATENTSCHRIFT

(11) **EP 3 875 217 B1**
(45) Veröffentlichungstag und Bekanntmachung des Hinweises auf die Patenterteilung: **06.05.2026**
(21) Anmeldenummer: 20160728.0
(22) Anmeldetag: 03.03.2020
(51) Int. Cl.: B23Q 15/22, B23Q 3/08, B23Q 17/00, B25J 15/06, B65G 47/91

(54) **VERFAHREN ZUM BETREIBEN EINER HANDHABUNGSANLAGE SOWIE HANDHABUNGSANLAGE UND COMPUTERPROGRAMMPRODUKT**
HANDLING SYSTEM, COMPUTER PROGRAM PRODUCT AND METHOD FOR OPERATING A HANDLING SYSTEM
PROCÉDÉ DE FONCTIONNEMENT D'UNE INSTALLATION DE MANIPULATION AINSI QU'INSTALLATION DE MANIPULATION ET PRODUIT PROGRAMME INFORMATIQUE

(43) Veröffentlichungstag der Anmeldung: 08.09.2021
(73) Patentinhaber: J. Schmalz GmbH, 72293 Glatten (DE)
(72) Erfinder: Stockburger, Ralf, 72293 Glatten (DE)
(74) Vertreter: DREISS Patentanwälte PartG mbB

(56) Entgegenhaltungen:
- EP-A1- 3 251 996
- DE-A1- 102014 206 308

## Beschreibung

Die Erfindung betrifft ein Verfahren zum Betreiben einer Handhabungsanlage gemäß dem Oberbegriff des Anspruchs 1 sowie eine Handhabungsanlage gemäß Anspruch 11.

Im vorliegenden Zusammenhang fasst der Begriff Handhabungsanlage verschieden Arten von Einrichtungen zusammen, mit welchen Werkstücke fixiert und bearbeitet werden. Für eine Bearbeitung eines Werkstückes wird es in der Regel mit einer Spanneinrichtung fixiert bzw. gespannt. Insbesondere großflächige Werkstücke, wie beispielsweise Holzplatten, werden dabei in der Regel an einer Mehrzahl von Positionen fixiert. Hierfür kommen insbesondere Unterdruckspannsysteme mit einer Mehrzahl von Blocksaugern zum Einsatz. Die Blocksauger werden derart an zugeordneten Konsolen fixiert, dass das Werkstück an Positionen entsprechend seiner Form und Material sowie entsprechend dem auszuführenden Bearbeitungsprozess gespannt wird.

Die Blocksauger sind Verschleiß ausgesetzt, z.B. durch den Bearbeitungsprozess selbst, durch Alterungserscheinungen oder Verschmutzung. Dies gilt insbesondere für den unmittelbar am Werkstück anliegenden Bereich um die Saugstelle des Blocksaugers, welcher oftmals mit Dichtungseinrichtungen (Dichtplatte) oder Anti-Rutsch-Einrichtungen versehen ist. Ein Verschleiß kann dazu führen, dass die Haltekräfte des jeweiligen Blocksaugers nicht mehr ausreichend sind und damit die Präzision und Betriebssicherheit der Bearbeitung des Werkstücks beeinträchtigt wird, z.B. durch Verrutschen des Werkstücks.

Vor diesem Hintergrund ist es bekannt, die Blocksauger beim Betrieb der Handhabungsanlage auf ihre Funktionalität zu überwachen. Hierbei können die Blocksauger Sensoreinrichtungen aufweisen, um Funktionszustände und Betriebsgrößen aufzunehmen an eine zentrale Maschinensteuerung der Handhabungsanlage übermitteln. Die Maschinensteuerung kann dann in Abhängigkeit der Informationen über die Blocksauger eine entsprechende Ansteuerung der Handhabungsanlage vornehmen, vgl. z.B. DE 10 2015 014 585 A1.

Zur weiteren Verbesserung der Betriebssicherheit und des Wartungskomforts ist es auch erwünscht, dass der Benutzer gezielt Prüfmessungen durchführen kann, um die Funktionstüchtigkeit des Blocksaugers zu überprüfen. Insbesondere sollen hierzu Qualitätsinformationen ermittelt werden, wie z.B. die Fähigkeit des Blocksaugers zum effektiven Ansaugen, die Dichtheit der Saugstelle des Blocksaugers bei Anliegendem Werkstück oder Funktionsfehler im Blocksauger, um einen defekten Blocksauger bedarfsgerecht zu Warten oder austauschen zu können.

Wenn entsprechende Prüfungsroutinen in die Maschinensteuerung integriert werden sollen, so erfordert dies in der Regel einen vergleichsweise aufwändigen Eingriff in die Software und/oder Hardware der Steuerung. Auch die Bereitstellung entsprechender Einrichtungen zur Durchführung einer solchen Qualitätsprüfung und Überwachung kann aufwändig sein. Insbesondere in Handhabungsanlagen mit einer Mehrzahl von Blocksaugern stellt die Überwachung und Funktionsprüfung der Blocksauger daher eine Herausforderung dar.

DE 10 2014 206 308 A1 und EP 3 251 996 A1 offenbaren bekannte Handhabungssysteme.

Die Erfindung beschäftigt sich mit der Aufgabe, die Überwachung der Funktionsfähigkeit der Unterdruckspannsysteme in Handhabungsanlagen zu vereinfachen und für den Benutzer komfortabel zu gestalten.

Diese Aufgabe wird durch ein Verfahren zum Betreiben einer Handhabungsanlage gemäß Anspruch 1 sowie eine für die Ausführung des Verfahrens eingerichtete Handhabungsanlage gemäß Anspruch 11 gelöst, deren Merkmale und Ausgestaltungen im Folgenden gemeinsam mit dem Verfahren beschrieben werden.

Das Verfahren zum Betreiben der Handhabungsanlage ist insbesondere dazu ausgelegt, einen Funktionsfähigkeitstest des Unterdruckspannsystems der Handhabungsanlage durchzuführen. Insofern handelt es sich auch um ein Verfahren zum Testen der Funktionsfähigkeit eines Unterdruckhandhabungssystems.

Die Handhabungsanlage umfasst ein Unterdruckspannsystem zum Fixieren eines Werkstückes, wobei das Unterdruckspannsystem wenigstens einen Blocksauger aufweist, welcher an einer Konsole gehaltert werden kann. Das Unterdruckspannsystem umfasst außerdem eine Unterdruckversorgung, um für den Blocksauger einen Betriebs-Unterdruck bereitzustellen. Die Unterdruckversorgung ist beispielsweise mit einem Unterdruckverteilersystem in der Art eines Leitungssystems in der Konsole verbunden. Der Blocksauger weist wenigstens eine Saugstelle auf und ist dazu ausgebildet, ein anliegendes Werkstück anzusaugen und dadurch zu fixieren, wenn der Blocksauger mit Betriebs-Unterdruck versorgt wird.

Die Handhabungsanlage kann außerdem weitere funktionale Einrichtungen umfassen, beispielsweise eine Bearbeitungsmaschine zum Bearbeiten des fixierten Werkstückes, und/oder eine Steuereinrichtung zur Steuerung der Unterdruckversorgung, und insbesondere auch zur Steuerung von weiteren Komponenten der Handhabungsanlage wie beispielsweise die Bearbeitungsmaschine.

Die Handhabungsanlage umfasst außerdem ein, insbesondere mobiles, Kommunikationsendgerät zur Interaktion mit einem Benutzer der Handhabungsanlage. Diese Interaktion umfasst vorzugsweise die Datenausgabe an den Benutzer und die Eingabe von Befehlen und/oder Daten durch den Benutzer. Ferner stellt das Kommunikationsendgerät die Möglichkeit zur Anzeige von Informationen an den Benutzer bereit, insbesondere mittels eines Displays. Die genannten Funktionen des Kommunikationsendgerätes werden insbesondere auch unter Mitwirkung eines auf dem Kommunikationsendgerät ablaufenden Computerprogramm (App) bereitgestellt.

Die Handhabungsanlage umfasst außerdem eine Prüfvorrichtung, welche insbesondere an der Konsole angeordnet werden kann und an welcher der Blocksauger in einer Prüfkonfiguration gehaltert und mit dem Betriebs-Unterdruck versorgt werden kann. Die Unterdruckversorgung erfolgt dabei insbesondere mittels eines Unterdruckkanals, welcher vorzugsweise in die Prüfvorrichtung integriert ist. Dieser Unterdruckkanal kann z.B. auch in der Art einer Schlauchleitung innerhalb oder außerhalb der Prüfvorrichtung realisiert sein. Die Prüfvorrichtung umfasst außerdem eine Messeinrichtung zur Ermittlung wenigstens einer Kenngröße für einen Blocksauger, der in der Prüfkonfiguration an der Prüfvorrichtung gehaltert ist. Die Messeinrichtung ist insofern dazu ausgebildet, wenigstens eine Messung von physikalischen Größen, wie beispielsweise Druck, Zeitdauern oder ähnlichen durchzuführen.

Die Prüfvorrichtung, der Blocksauger und das Kommunikationsendgerät weisen außerdem Einrichtungen auf, die es ermöglichen, dass die Prüfvorrichtung und der Blocksauger an dem Kommunikationsendgerät angemeldet werden können, insbesondere im Sinne einer computertechnischen Registrierung.

Insbesondere die Prüfvorrichtung weist eine drahtlose Kommunikationsverbindung zum Übertragen eines Datensignals betreffend eine gemessene Kenngröße an das Kommunikationsendgerät auf. Das Kommunikationsendgerät verfügt über entsprechende Mittel, um das Datensignal zu empfangen. Weiterhin ist das Kommunikationsendgerät dazu eingerichtet, aus der empfangenen Kenngröße eine Qualitätsinformation über den Blocksauger zu ermitteln und einen entsprechenden Indikator anzuzeigen, der die Qualitätsinformation repräsentiert.

Gemäß dem Verfahren werden folgende Schritte durchgeführt, insbesondere in der nachstehend wiedergegebenen Reihenfolge:
- Vorzugsweise wird zunächst die Prüfvorrichtung auf der Konsole angeordnet, insbesondere derart, dass die Prüfvorrichtung einen Halterungsabschnitt für den Blocksauger bereitstellt, wobei die Prüfvorrichtung derart ausgebildet ist, dass ein gehalterter Blocksauger durch die Prüfvorrichtung hindurch mit der Unterdruckversorgung verbunden ist (also insbesondere mit einem Unterdruckverteilersystem in der Konsole);
- Anordnen des Blocksaugers an der Prüfvorrichtung in der Prüfkonfiguration;
- Anmelden der Prüfvorrichtung an dem Kommunikationsendgerät und Anmelden des wenigstens einem Blocksauger an dem Kommunikationsendgerät, wobei die Anmeldung nicht zwingend in der angegebenen Reihenfolge erfolgen muss;
- gegebenenfalls Versetzen des Kommunikationsendgerätes in einen Prüfmodus, um die nachstehend wiedergegebenen Verfahrensschritte durchzuführen;
- Durchführung einer Prüfroutine, wobei die Prüfvorrichtung im Zuge der Prüfroutine wenigstens eine Kenngröße des Blocksaugers misst, während der Blocksauger in der Prüfkonfiguration gehaltert ist und insbesondere entsprechend mit Betriebs-Unterdruck versorgt wird;
- Übermittlung der gemessenen Kenngröße von der Prüfvorrichtung zu dem Kommunikationsendgerät mittels eines Datensignals, insbesondere über eine drahtlose Kommunikationsverbindung;
- Ermitteln einer Qualitätsinformation aus der Kenngröße, wobei das Ermitteln durch das Kommunikationsendgerät erfolgt, insbesondere unter Mitwirkung des auf dem Kommunikationsendgerät ablaufenden Computerprogramms (APP);
- Ermitteln und Anzeigen eines die genannte Qualitätsinformation repräsentierenden Indikators mittels des Kommunikationsendgeräts, vorzugsweise auf einem Display des Kommunikationsendgeräts, wobei insbesondere Anzeigeelemente wie Zahlenwerte, Icons oder Balkendiagramme dargestellt werden.

Das Kommunikationsendgerät bzw. das hierauf ablaufende Computerprogramm ermittelt aus den Messergebnissen also eine Information (Qualitätsinformation), welche beispielsweise verschleißbezogene Qualitätseigenschaften des Blocksaugers, wie Dichtigkeit bzw. Leckage oder Leistungsfähigkeit zum Ansaugen wiedergibt. Grundsätzlich können auf dem Kommunikationsgerät visuell die technischen Bedingungen der Prüfvorrichtung mit dem angeordneten Blocksauger und insbesondere visuelle Informationen über den Qualitätszustand des Blocksaugers angezeigt werden. Alternativ oder ergänzend sind auch Tonausgaben möglich.

Grundsätzlich kann die Prüfvorrichtung derart ausgebildet sein, dass die Prüfroutine weitgehend autark von einer zentralen Steuereinrichtung der Handhabungsanlage durchgeführt wird. Insofern ist es nicht erforderlich das Kommunikationsendgerät mit der zentralen Steuereinrichtung zu verbinden, was die Einrichtung des Verfahrens und der Handhabungsanlage erleichtert.

Die Messung der Kenngröße erfolgt mittels und vorzugsweise innerhalb der Prüfvorrichtung und betrifft den Blocksauger bei Vorliegen der Prüfkonfiguration und während der Versorgung des Blocksaugers mit dem Betriebs-Unterdruck. Wie nachstehend erläutert, wird hierbei vorzugsweise ein Prüf-Werkstück an der Saugstelle des Blocksaugers angelegt.

Vorzugsweise umfasst die Prüfroutine die Messung einer Evakuierungszeitdauer in einem Zustand, in dem der Blocksauger in Prüfkonfiguration vorliegt (zum Beispiel mit einem anliegenden Prüf-Werkstück, siehe unten) und während der Blocksauger mit Betriebs-Unterdruck versorgt wird. Die Evakuierungszeitdauer ist vorzugsweise diejenige Zeitdauer, welche vergeht, bis der Druck in der Saugstelle des Blocksaugers von einem ersten Schwellwert p₂ (also einem Druckwert unterhalb des Umgebungsdrucks) auf einen zweiten Schwellwert p₁ abgesunken ist. Die Messung erfolgt vorzugsweise innerhalb der Prüfvorrichtung, vorzugsweise direkt in einem Unterdruckkanal, welcher die Saugstelle des Blocksaugers mit dem erforderlichen Betriebs-Unterdruck versorgt. Der erste Schwellwert p₂ liegt vorzugsweise bei ca. 60% des erreichbaren Vakuums (entsprechend ca. 40% des Umgebungsdrucks). Der zweite Schwellwert p₁ liegt insbesondere bei ca. 75% des erreichbaren Vakuums (was ca. 25% des Umgebungsdrucks entspricht). Es können aber auch andere Druckwerte verwendet werden, wobei sich im Allgemeinen ein erster Schwellwert im Bereich von 50% bis 70% des erreichbaren Vakuums und ein zweiter Schwellwert im Bereich von 75% bis 85% des erreichbaren Vakuums als vorteilhaft herausgestellt hat.

Die Messeinrichtung in der Prüfvorrichtung umfasst vorzugsweise eine Druckmesseinrichtung mit einem ersten Messschaltpunkt bei dem ersten Schwellwert p₂ und einem zweiten Messschaltpunkt bei einem zweiten Schwellwert p₁, sowie eine Zeitmesseinrichtung zur Messung der Zeitdauer zwischen dem Erreichen des ersten Schwellwerts und dem zweiten Schwellwerts, das heißt der Zeitdauer zwischen der Aktivierung des ersten Messschaltpunkts und des zweiten Messschaltpunkts.

Um beispielsweise den Energieverbrauch der Prüfvorrichtung und der darin integrierten Elektronik zu verringern ist die Prüfvorrichtung vorzugsweise derart ausgebildet, dass sie einen Ruhemodus und einen Messmodus einnehmen kann, wobei im Ruhemodus beispielsweise die Messeinrichtung in einem passiven Zustand (Stand-by-Zustand oder deaktiviert) vorliegt, und wobei im Messmodus die Prüfvorrichtung zur Messung der Kenngröße bereit ist.

Vorzugsweise wird die Prüfvorrichtung erst nach dem Anmelden der Prüfvorrichtung an dem Kommunikationsendgerät und/oder nach dem Anmelden des Blocksaugers an dem Kommunikationsendgerät durch Übertragung eines Prüf-Startsignals von dem Kommunikationsendgerät zu der Prüfvorrichtung aus dem Ruhemodus aufgeweckt und in den Messmodus versetzt. Die Übertragung des Prüf-Startsignals wird insbesondere durch einen von dem Benutzer an dem Kommunikationsendgerät mitgeteilten Startbefehl verursacht.

Das Anmelden des Blocksaugers und/oder der Prüfvorrichtung ist z.B. als ein Registrierungsprozess an dem Kommunikationsendgerät zu verstehen, wobei dem Kommunikationsendgerät Identifikationsdaten des Blocksaugers bzw. der Prüfvorrichtung übermittelt werden. Nach dem Anmelden hat das Kommunikationsendgerät den Blocksauger bzw. die Prüfvorrichtung computertechnisch erfasst und kann beispielsweise das jeweilige Gerät in einer virtuellen Umgebung identifizieren und Daten zuordnen. Das Anmelden kann insbesondere auch umfassen, dass eine Kommunikationsverbindung aufgebaut wird, vorzugsweise drahtlos mittels Funksignalen. Insofern wird vorzugsweise ein Identifikationssignal zu dem Kommunikationsendgerät übermittelt. Hierzu kann beispielsweise das Kommunikationsendgerät dazu ausgebildet sein, mittels einer Transponder-Einrichtung (zum Beispiel NFC) ein Identifikationssignal von einem entsprechenden Transponder-Etikett am Blocksauger bzw. an der Prüfvorrichtung auszulesen.

Alternativ oder ergänzend kann auch vorteilhaft sein, dass das Anmelden des Blocksaugers an dem Kommunikationsendgerät und/oder das Anmelder der Prüfvorrichtung an dem Kommunikationsendgerät durch Einscannen eines insbesondere grafisch dargestellten Identifikationscodes erfolgt. Hierzu weist das Kommunikationsendgerät vorzugsweise einen entsprechenden optischen Scanner, insbesondere Kamera auf.

Das Kommunikationsendgerät ist insofern vorteilhafterweise durch ein Smartphone realisiert, welches eine Kamerafunktion umfasst. Insbesondere stellt das auf dem Kommunikationsendgerät ablaufende Computerprogramm (APP) eine entsprechende Funktion zur Datenverarbeitung von Bilddaten bereit. Der Identifikationscode kann beispielsweise in einfacher Form als Aufkleber auf dem Blocksauger bzw. der Prüfvorrichtung angebracht werden (z.B. Strichcode, QR-code oder Ähliches). Denkbar ist auch ein dauerhaftes Anbringen an der jeweiligen Vorrichtung.

Zur Durchführung der Prüfroutine wird die Saugstelle des Blocksaugers vorzugsweise unter definierten Bedingungen bedeckt, so dass sich bei Beaufschlagung mit Betriebs-Unterdruck in der Saugstelle (und entsprechend in dem die Saugstelle mit Unterdruck versorgenden Unterdruckkanal der Prüfvorrichtung) ein Unterdruck aufbauen kann. Hierzu umfasst die Prüfkonfiguration insbesondere, dass ein Prüf-Werkstück an die Saugstelle angelegt wird. Das Prüf-Werkstück kann beispielsweise ein plattenartiger Gegenstand sein, welcher definierte Oberflächeneigenschaften und/oder eine definierte Luftdurchlässigkeit aufweist.

Vorzugsweise sind mehrere verschiedene Prüf-Werkstücke vorgesehen, welche sich in ihren Oberflächeneigenschaften und/oder Luftdurchlässigkeit unterscheiden. Dies erlaubt es, verschiedene Prüfroutinen durchzuführen, welche ggf. verschiedene Qualitätsinformationen liefern.

Vor oder während der Durchführung der Prüfroutine gibt das Kommunikationsendgerät vorzugsweise Handlungsanweisungen an den Benutzer aus. Diese Handlungsanweisungen sind insbesondere darauf gerichtet, dem Benutzer mitzuteilen, wann und wie welches Prüf-Werkstück an der Saugstelle des Blocksaugers angeordnet werden soll und/oder wann und wie die Unterdruckversorgung zur Versorgung mit dem Betriebs-Unterdruck aktiviert oder deaktiviert werden soll. Insofern ist es nicht erforderlich, dass das Kommunikationsendgerät direkt mit der zentralen Steuereinrichtung kommuniziert. Eine derartige Prüfroutine lässt sich daher ohne große Umrüstungen in einer bestehenden Handhabungsanlage realisieren.

Das Kommunikationsendgerät und insbesondere das darauf ablaufende Computerprogramm ist vorzugsweise auch dazu eingerichtet, eine Fehlermeldung anzuzeigen, wenn bei der Durchführung der Prüfroutine ein Fehler auftritt. Auch in diesem Falle kann eine entsprechende Handlungsanweisung an den Benutzer ergehen, um den aufgetretenen Fehler zu korrigieren.

Das Kommunikationsendgerät kann vorzugsweise verschiedene Betriebsmodi einnehmen. Insbesondere ist ein Prüfmodus vorgesehen, in welchem das Kommunikationsendgerät wenigstens einen Indikator anzeigt, welcher die ermittelte Qualitätsinformation mittels grafischer Anzeigeelemente auf einem Display des Kommunikationsendgeräts anzeigt. Die grafischen Anzeigeelemente sind vorzugsweise in der Art eines Icons oder Balkendiagramm oder geeigneter Zahlenangaben ausgebildet.

Das Kommunikationsendgerät ist vorzugsweise ein Smartphone, auf dem das Computerprogramm in Form einer APP installiert ist. Zur weiteren Ausgestaltung kann das Kommunikationsendgerät auch eine Übersicht über alle angemeldeten Blocksauger und/oder Qualitätsinformationen für die angemeldeten Blocksauger darstellten.

Zur weiteren Ausgestaltung ist vorgesehen, dass die Prüfvorrichtung das Signal zum Anmelden an dem Kommunikationsendgerät einerseits und die Daten zur Übermittlung der gemessenen Kenngröße andererseits über zwei verschiedene Signalübertragungseinrichtungen übermittelt. Beispielsweise erfolgt die Anmeldung mittels NFC-Transponder, da hier die initiale Identifizierung vereinfacht ist. Die Datenübertragung kann beispielsweise mittels Bluetooths erfolgen. Denkbar ist aber auch, dass nur eine Art der Signalübertragung für Anmeldung und Übermittlung der Kenngröße verwendet wird.

Eine vorteilhafte Ausgestaltung besteht darin, dass das Kommunikationsendgerät die Qualitätsinformation und/oder die Kenngröße in einer Speichereinrichtung des Kommunikationsendgeräts hinterlegt. Alternativ oder ergänzend übermittelt das Kommunikationsendgerät die Qualitätsinformation über ein Datenaustausch-Netzwerk (zum Beispiel Internet) zu einem Service-Server. Derartige z.B. cloud-basierte Lösungen ermöglichen einen bedarfsgerechten und zeitnahen Service sowie bedarfsgerechten Zugriff auf Online-Verkäufe, auf Informationsmaterial zum Betreiben der Handhabungsanlage und insbesondere des Blocksaugers. Vorzugsweise ist das auf dem Kommunikationsendgerät ablaufende Computerprogramm (APP) dazu eingerichtet, über das Datenaustausch-Netzwerk eine Verbindung zu dem Service-Server herzustellen und die Qualitätsinformation bzw. die Kenngröße zu übertragen. Der Service-Server kann umgekehrt dem Kommunikationsendgerät dann Service-Daten übertragen.

Die zur Lösung des eingangs genannten Problems vorgeschlagene Handhabungsanlage ist insbesondere dadurch weiter ausgestaltet, dass die Prüfvorrichtung als modulare Einheit mit einer mechanischen und insbesondere auch pneumatischen Schnittstelle zum Befestigen an der Konsole ausgebildet ist. Die pneumatische Schnittstelle stellt vorzugsweise Fluidverbindung zu einem Unterdruckverteilersystem in der Konsole her.

Zur weiteren Ausgestaltung hat die Prüfvorrichtung eine netzunabhängige Energieversorgung, beispielsweise Batterie. Die Prüfvorrichtung ist dann insbesondere derart ausgebildet, dass dem Kommunikationsendgerät eine Ladezustandsinformation betreffend die verfügbare Energie der Energieversorgung übermittelt wird. Die Energieversorgung dient insbesondere zur netzunabhängigen Bereitstellung von Energie für die Messeinrichtung ggf. der Kommunikationsverbindung der Prüfvorrichtung. Insofern ist die Prüfvorrichtung vorzugsweise ein autark arbeitendes Modul. Eine derartige Prüfvorrichtung kann zur Nachrüstung in eine bestehende Handhabungsanlage eingefügt werden, ohne dass dafür Umgestaltungen in der Energieversorgung vorgenommen werden müssen. Die Funktionsfähigkeit der Prüfvorrichtung kann dann komfortabel mit dem Kommunikationsendgerät überwacht werden.

Im Folgenden wird ein Kommunikationsendgerät beschrieben, welches zur Verwendung in einer Handhabungsanlage und speziell bei der Durchführung des vorstehend beschriebenen Verfahrens eingerichtet ist.

Um das Kommunikationsendgerät, insbesondere ein Smartphone, zur Verwendung gemäß dem vorstehend beschriebenen Verfahren einzurichten, wird insbesondere ein Computerprogramm sowie ein zugehöriges Computerprogrammprodukt vorgeschlagen.

Das Computerprogrammprodukt umfasst Befehle, welche das Kommunikationsendgerät dazu veranlassen, die ihm zugeordneten Verfahrensschritte auszuführen. Insbesondere können die Prüfvorrichtung und der Blocksauger an dem Kommunikationsendgerät angemeldet werden. Außerdem kann ein Datensignal, welches die gemessene Kenngröße repräsentiert von der Prüfvorrichtung empfangen werden. Die Befehle des Computerprogrammprodukts veranlassen das Kommunikationsendgerät dann dazu, in einem Prüfmodus Handlungsanweisungen zur Durchführung der Prüfroutine an den Benutzer auszugeben, sowie eine Kenngröße von der Prüfvorrichtung zu empfangen. Weiter veranlasst das Computerprogramm das Kommunikationsendgerät dazu, aus der Kenngröße eine Qualitätsinformation zu ermittelt und einen die Qualitätsinformation repräsentierenden Indikator anzuzeigen. Das Computerprogrammprodukt ist insbesondere eine APP für ein Smartphone, welches das Kommunikationsendgerät bildet.

Das Computerprogrammprodukt kann das Kommunikationsendgerät vorzugsweise auch in weitere Betriebsmodi versetzen, z.B. um eine Art virtuelle Handhabungsumgebung bereitzustellen. Beispielhaft genannt seien ein Verwaltungsmodus, in welchen die angemeldeten Blocksauger in einer virtuellen Handhabungsumgebung mit ihren zugehörigen Qualitätsinformationen angezeigt und ggf. visualisiert werden. Der Verwaltungsmodus ist insbesondere auch dazu eingerichtet, eine größere Anzahl von Blocksaugern (z.B. mehr als 20) in einer Handhabungsanlage zu verwalten, welche mehreren Bearbeitungsmaschinen umfasst. Hierzu wird z.B. die Funktion bereitgestellt, dass jeder angemeldete Blocksauger eindeutig einer Bearbeitungsmaschine zugeordnet ist (z.B. insofern zugeordnet, als ein von dem betrachteten Blocksauger fixiertes Werkstück mit der jeweiligen Bearbeitungsmaschine bearbeitet werden soll). Insbesondere werden in dem Verwaltungsmodus für jede Bearbeitungsmaschine die angemeldeten und zugeordneten Blocksauger und ggf. auch die jeweils zugehörige Qualitätsinformation angezeigt. Außerdem können jeweils bedarfsgerechte Informationen und Betriebsanweisungen bzw. Betriebsanleitungen angezeigt werden. Das Computerprogrammprodukt stellt vorzugsweise auch einen Statistik-Modus bereit, in welchem z.B. aus den Qualitätsinformationen für die verschiedenen Blocksauger eine statistische Kenngröße ermittelt (und angezeigt) wird, welche den Verschleiß der Blocksauger über einen definierten Statistikzeitraum wiedergibt. Die statistische Kenngröße kann z.B. für die Gesamtheit aller Blocksauger oder für die jeweils einer Bearbeitungsmaschine zugeordneten Blocksauger angezeigt werden. In dem Statistik-Modus können z.B. auch die Anzahl der angemeldeten und/oder ggf. verschlissenen Blocksauger und/oder Ausfallquoten bzw. Defektquoten und/oder Kosten für einen Statistikzeitraum ermittelt und ggf. angezeigt werden. Denkbar ist auch, dass die genannten Auswertungen spezifisch für einen jeweiligen Benutzer erfolgen. Hierzu ist vorzugsweise vorgesehen, dass sich auch der Benutzer individuell an dem Kommunikationsendgerät anmeldet.

Außerdem kann ein Wartungsmodus vorgesehen sein, in welchem dem Benutzer beispielsweise Handlungsanweisungen zur Durchführung von Wartungshandlungen angeboten und ggf. dargestellt werden. Auch eine Verlinkung zu Schulungsvideos ist denkbar. Vorteilhaft kann auch ein Service-Modus sein, in welchem das Kommunikationsendgerät eine Verbindung zu einem Server herstellt, insbesondere über das Internet, und dem Benutzer bedarfsgerechte Serviceleistungen oder Bestelloptionen oder Kaufoptionen anbietet.

Die Erfindung wird im Folgenden anhand der Figuren weiter beschrieben. Es zeigen:
- Figur 1:: skizzierte Darstellung einer Handhabungsanlage zur Durchführung des erfindungsgemäßen Verfahrens;
- Figur 2:: beispielhafte Darstellung eines zeitlichen Verlaufs des zur Saugwirkung des Blocksaugers wirksamen Drucks während einer Prüfroutine;
- Figur 3:: Skizzierte Darstellung eines Kommunikationsendgeräts mit Anzeige im Prüfmodus.

In den Figuren sowie in der folgenden Beschreibung sind für identische oder einander entsprechende Merkmale jeweils dieselben Bezugszeichen verwendet.

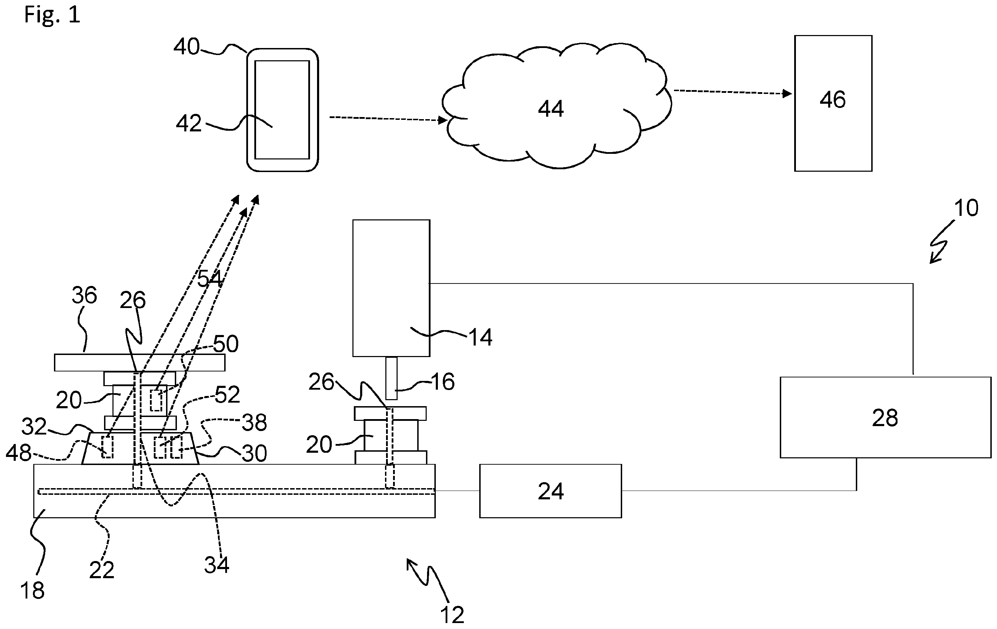

Die Figur 1 zeigt skizziert eine Handhabungsanlage 10 mit einem Unterdruckspannsystem 12 sowie beispielhaft einer Bearbeitungsmaschine 14. Die Bearbeitungsmaschine 14 dient dazu, ein aufgespanntes Werkstück (nicht näher dargestellt) mit einem Bearbeitungswerkzeug 16 zu bearbeiten. Das Unterdruckspannsystem 12 umfasst eine Konsole 18, an welcher wenigstens ein Blocksauger 20 gehaltert werden kann.

Die Konsole 18 weist ein Unterdruckverteilersystem 22 (beispielsweise in der Art von innenliegenden Kanälen) auf, welches mit einer Unterdruckversorgung 24 verbunden ist. Die Unterdruckversorgung 24 liefert den Betriebs-Unterdruck für Blocksauger 20 des Unterdruckspannsystems 12. Die Blocksauger 20 weisen jeweils eine Saugstelle 26 auf, durch welche ein Werkstück angesaugt und dadurch fixiert werden kann. Im normalen Betrieb werden die Blocksauger 20 derart an der Konsole 18 angeordnet, dass die Saugstelle mit Betriebs-Unterdruck versorgt werden kann. Hierzu wird eine Fluidverbindung zu dem Unterdruckverteilersystem 22 in der Konsole 18 hergestellt.

Die Handhabungsanlage 10 umfasst ferner eine Steuereinrichtung 28, welche beispielsweise die Unterdruckversorgung 24 und/oder die Bearbeitungsmaschine 14 prozessgerecht ansteuert und ggf. weitere Steuerungsfunktionen ausführt.

Es ist eine Prüfvorrichtung 30 vorgesehen, welche an der Konsole 18 angeordnet werden kann. Die Prüfvorrichtung 30 hat einen Halterungsabschnitt 32, an welchem der Blocksauger 20 fixiert werden kann. Dies erfolgt insbesondere derart, dass die Saugstelle 26 des Blocksaugers 20 durch einen innenliegenden Unterdruckkanal 34 mit dem Unterdruckverteilersystem 22 fluidisch verbunden wird.

In dem Beispiel gemäß Figur 1 ist ferner ein Prüf-Werkstück 36 vorgesehen, welches derart auf den Blocksauger 20 aufgelegt werden kann, dass es mittels der Saugstelle 26 angesaugt werden kann. Diese, in Figur 1 dargestellte, Konfiguration wird im vorliegenden Zusammenhang als Prüfkonfiguration bezeichnet.

Zum Messen einer Kenngröße (zum Beispiel Druck, Evakuierungszeit, usw.) weist die Prüfvorrichtung 30 eine Messeinrichtung 38 auf. Die Messeinrichtung 38 umfasst beispielsweise Drucksensoren zur Messung des Druckes in dem Unterdruckkanal 34 und eine Zeitmesseinrichtung zur Messung einer Evakuierungszeit, wie nachfolgend noch näher beschrieben.

Um das beschriebene Verfahren durchzuführen, ist ein Kommunikationsendgerät 40 vorgesehen, welches im dargestellten Beispiel als Smartphone ausgebildet ist. Das Kommunikationsendgerät 40 hat ein Display 42 zur Interaktion mit einem Benutzer der Handhabungsanlage 10. Vorteilhafterweise ist das Kommunikationsendgerät 40 derart ausgebildet, dass es über ein Datenaustauschnetzwerk 44 (z.B. Internet) eine Verbindung zu einem Service-Server 46 herstellen kann. Das Kommunikationsendgerät 40 stellt Funktionen zur Datenverarbeitung und zur Anzeige von Informationen an den Benutzer bereit, beispielsweise mittels eines auf dem Kommunikationsendgerät 40 installierten und ablaufendem Computerprogramm (APP).

Das Kommunikationsendgerät 40, die Prüfvorrichtung 30 sowie der Blocksauger 20 sind außerdem derart eingerichtet, dass der Blocksauger 20 und die Prüfvorrichtung 30 computertechnisch an dem Kommunikationsendgerät 40 angemeldet werden können. Diese Anmeldung erfolgt beispielsweise über eine erste Signalübertragungseinrichtung 48 der Prüfvorrichtung 30 zu dem Kommunikationsendgerät 40, bzw. über eine entsprechende Signalübertragungseinrichtung 50 (zum Beispiel NFC-Etikett) des Blocksaugers 20 zu dem Kommunikationsendgerät 40.

Die Prüfvorrichtung 30 weist außerdem eine zweite Signalübertragungseinheit 52 auf, mittels welcher ein Datensignal zu dem Kommunikationsendgerät 40 übertragen werden kann. Insgesamt wird so eine Kommunikationsverbindung 54 bereitgestellt.

Die Prüfvorrichtung 30 kann eine integrierte Batterie (nicht näher dargestellt) aufweisen, z.B. im die Messeinrichtung 38 und/oder die Signalübertragungseinrichtungen 48, 52 mit Energie zu versorgen. Die Prüfvorrichtung 30 übermittelt dem Kommunikationsendgerät 30 insbesondere eine Ladezustandsinformation betreffend die verfügbare Energie der Batterie, z.B. mittels der zweiten Signalübertragungseinheit 52.

Zur Durchführung des Verfahrens wird z.B. zunächst die Prüfvorrichtung 30 an der Konsole 18 angeordnet. Außerdem wird der Blocksauger in der Prüfkonfiguration (vergleiche Figur 19) an der Prüfvorrichtung 30 angeordnet. Dies kann aber auch erst nach dem Anmelden an dem Kommunikationsendgerät 40 (siehe nachfolgend) geschehen.

Der Benutzer kann das Kommunikationsendgerät 40 durch eine geeignete Eingabe in einen Prüfmodus versetzen. Der zu testende Blocksauger 20 wird dann, vorzugsweise durch Übermittlung eines Identifikationssignals an dem Kommunikationsendgerät 40 angemeldet. Entsprechend wird die Prüfvorrichtung 30 durch Übermittlung eines entsprechenden Identifikationssignals an dem Kommunikationsendgerät 40 angemeldet. Das Herstellen der Prüfkonfiguration, sowie das Anmelden der verschiedenen Einrichtungen muss nicht zwingend in der angegebenen Reihenfolge erfolgen.

Nach dem Anmelden der Prüfvorrichtung 30 und/oder des Blocksaugers 20 kann der Benutzer das Kommunikationsendgerät 40 durch einen eingegebenen Startbefehl dazu veranlassen, ein Prüf-Startsignal an die Prüfvorrichtung 30 zu übertragen. Der Empfang des Prüf-Startsignals an der Prüfvorrichtung 30 führt insbesondere dazu, dass die Prüfvorrichtung 30 aus einem Ruhemodus in einen Messmodus versetzt wird, in welchem die Messeinrichtung 38 zur Messung einer Klemmgröße bereit ist.

Das Kommunikationsendgerät 40 gibt dann Handlungsanweisungen an den Benutzer aus, insbesondere durch geeignete Darstellungen auf dem Display 42. Die Handlungsanweisungen sind darauf gerichtet, dass der Benutzer die Prüfkonfiguration sicherstellt (soweit nicht bereits erfolgt) und die Unterdruckversorgung 24 zur Durchführung einer Prüfroutine aktiviert.

Die Prüfroutine wird dann vorzugsweise von der Prüfvorrichtung 30 in der Art einer Evakuierungszeitmessung durchgeführt. Dabei ermittelt die Prüfvorrichtung 30 eine Kenngröße des Blocksaugers 20. Insbesondere misst die Prüfvorrichtung 30 bei Vorliegen der Prüfkonfiguration und nachdem die Unterdruckversorgung des Blocksaugers begonnen hat, eine Evakuierungszeit als diejenige Zeitdauer, die für ein Absinken des Drucks in dem Unterdruckkanal 34 von einem ersten Schwellwert p₂ unterhalb des Umgebungsdrucks auf einen zweiten Schwellwert p₁ benötigt wird.

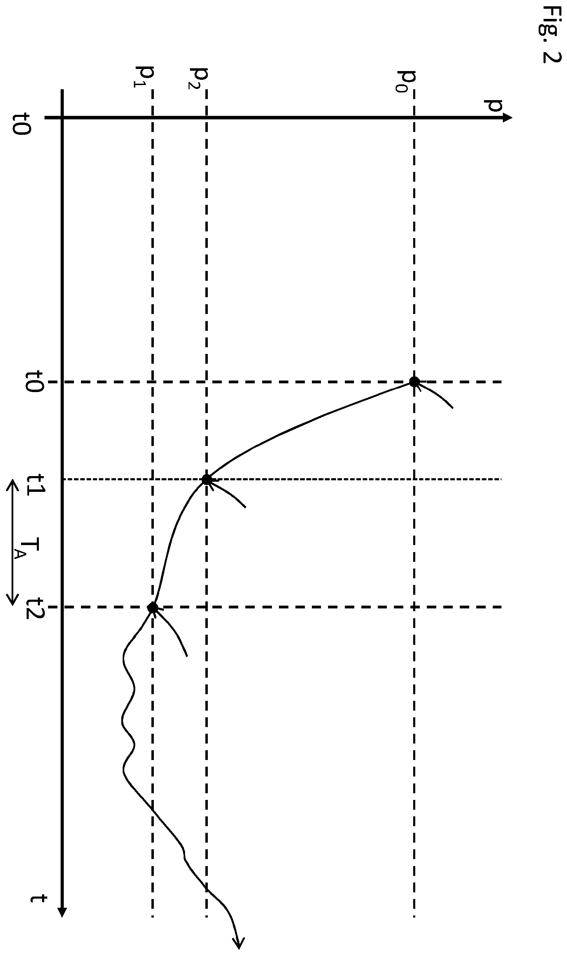

Der Druckverlauf bei dieser Messung ist zur Verdeutlichung in Figur 2 skizziert. Nachdem die von dem Prüf-Werkstück 36 bedeckte Saugstelle 26 des Blocksaugers 20 mit Betriebs-Unterdruck versorgt wird, beginnt der Druck ausgehend von dem Umgebungsdruck p₀ abzusinken (Zeitraum t0 bis t1 in Figur 2. Wie erläutert kann das Kommunikationsendgerät 40 insbesondere entsprechende Handlungsanweisungen an den Benutzer ausgeben, um die Besaugung der Stelle 26 zu starten.

Die Messeinrichtung 38 ist insbesondere derart ausgebildet, dass sie einen ersten Messschaltpunkt bei dem Schwellwert p₂ (insbesondere ca. 60% des erreichbaren Vakuums) aufweist. Bei Auslösen dieses ersten Messschaltpunktes wird vorzugsweise eine Zeitmesseinrichtung der Messeinrichtung 38 gestartet und misst die Zeit, bis der Druck soweit abgesunken ist (zweiter Schwellwert p₁, vorzugsweise bei ca. 75% des erreichbaren Vakuums) und dadurch der zweite Messschaltpunkt ausgelöst wird. Diese Evakuierungszeit T_{A} ist eine Kenngröße des Blocksaugers 20, welche die Dichtheit bzw. Leckage des Systems charakterisiert.

Gemäß dem Verfahren wird die gemessene Kenngröße, insbesondere die Evakuierungszeit T_{A} mittels eines Datensignals von der Signalübertragungseinrichtung 52 über die Kommunikationsverbindung 54 zu dem Kommunikationsendgerät 40 übermittelt.

Das Kommunikationsendgerät 40 ermittelt, insbesondere durch das auf ihm ablaufende Computerprogramm, eine die Kenngröße repräsentiere Qualitätsinformation. Dies kann beispielsweise ein Leistungsfähigkeitsindex zwischen 0% und 100% sein, wobei 100% ein vollständiges Erfüllen der Qualitätsanforderungen bedeutet. Der Wert 0% kann z.B. eine problematische Leckage repräsentieren. Das Kommunikationsendgerät 40 ist insbesondere auch dazu ausgebildet, einen oder mehrere die Qualitätsinformationen repräsentierenden Indikator 56 darzustellen.

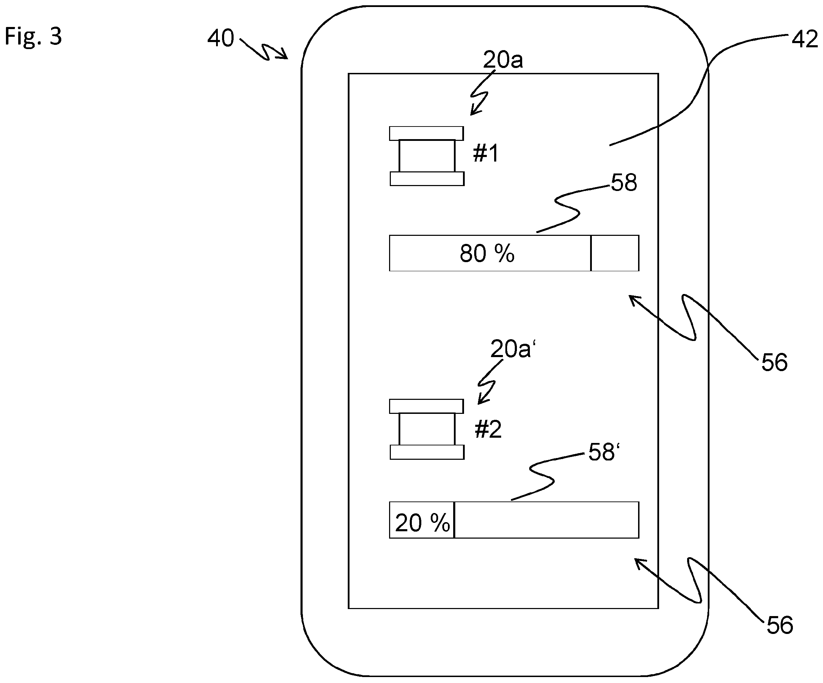

Die Figur 3 zeigt das Display 42 des Kommunikationsendgeräts 40 mit entsprechenden Darstellungen des Indikators 56. Der Indikator 56 umfasst insbesondere ein grafisches Anzeigeelement 58, beispielsweise in der Art eines Balkendiagramms, welches den Leistungsfähigkeitsindex repräsentiert. Da der jeweilige Blocksauger 20 an dem Kommunikationsendgerät 40 angemeldet und dadurch identifiziert ist, kann das Kommunikationsendgerät 40 beispielsweise in dem Prüfmodus (vergleiche Figur 3) für verschiedene Blocksauger jeweils die an den zugehörigen Indikator 56 für einen jeweiligen Blocksauger anzeigen. Auch die Blocksauger selbst können visuell symbolisiert werden. So zeigt Figur 3 beispielsweise zwei Blocksauger (#1 und #2) visualisiert durch Icons 20a, 20a' mit dem jeweils zugehörigen Indikator 56 (grafisches Anzeigeelement 58, 58').

Das Kommunikationsendgerät 40 kann dann beispielsweise über das Datenaustausch-Netzwerk 44 (zum Beispiel Internet) die Qualitätsinformationen zu dem Service-Server 46 übermitteln. Der Service-Server 46 kann dann z.B. bedarfsgerecht Handlungsanweisungen zurücksenden, statistische Auswertungen vornehmen oder bedarfsgerechte Service-Leistungen anbieten.

## Patentansprüche

1. Verfahren zum Betreiben einer Handhabungsanlage (10),
wobei die Handhabungsanlage (10) umfasst:
- ein Unterdruckspannsystem (12) zum Fixieren eines Werkstücks (4);
wobei das Unterdruckspannsystem (12) wenigsten einen Blocksauger (20) und eine Konsole (28) zum Haltern des Blocksaugers (20) sowie eine Unterdruckversorgung (24) zur Versorgung des Blocksaugers (20) mit einem Betriebs-Unterdruck aufweist,
wobei der Blocksauger (20) wenigstens eine Saugstelle (26) aufweist und dazu ausgebildet ist, bei Versorgung mit Betriebs-Unterdruck ein an der Saugstelle (26) anliegendes Werkstück anzusaugen und zu fixieren,
- ein Kommunikationsendgerät (40) zur Interaktion mit einem Benutzer der Handhabungsanlage (10), wobei das Kommunikationsendgerät (40) Funktionen zur Datenverarbeitung und zur Anzeige von Informationen an den Benutzer bereitstellt, insbesondere mittels eines auf dem Kommunikationsendgerät ablaufenden Computerprogramms (APP);
- eine Prüfvorrichtung (30), an welcher der Blocksauger (20) in einer Prüfkonfiguration gehaltert und mit Betriebs-Unterdruck versorgt werden kann, wobei die Prüfvorrichtung (30) eine Messeinrichtung (38) zur Ermittlung wenigstens einer Kenngröße aufweist,
wobei das Verfahren umfasst:
- Anordnen des Blocksaugers (20) an der Prüfvorrichtung (30) in einer Prüfkonfiguration, Anmelden der Prüfvorrichtung (30) an dem Kommunikationsendgerät (40) und Anmelden des Blocksaugers (20) an dem Kommunikationsendgerät (40);
- Durchführung einer Prüfroutine, wobei die Prüfvorrichtung (30) wenigstens eine Kenngröße des Blocksaugers (20) misst;
- Übermittlung der gemessenen Kenngröße von der Prüfvorrichtung (30) zu dem Kommunikationsendgerät (40) mittels eines Datensignals, insbesondere über eine drahtlose Kommunikationsverbindung (54);
- Ermitteln einer Qualitätsinformation aus der Kenngröße durch das Kommunikationsendgerät (40), insbesondere mittels des auf dem Kommunikationsendgerät (40) ablaufenden Computerprogramms (APP);
- Anzeigen eines die Qualitätsinformation repräsentierenden Indikators (56) mittels des Kommunikationsendgeräts.

2. Verfahren nach Anspruch 1, wobei die Prüfroutine die Messung einer Evakuierungszeitdauer (T_{A}) als diejenige Zeitdauer umfasst, welche vergeht, bis der Druck, der in der Saugstelle (26) oder in einem die Saugstelle (26) mit Unterdruck versorgenden Unterdruckkanal (34) der Prüfvorrichtung (30) herrscht, von einem ersten Schwellwert (p₂) auf einen zweiten Schwellwert (p₁) abgesunken ist.

3. Verfahren nach Anspruch 1 oder 2, wobei nach dem Anmelden der Prüfvorrichtung (30) an dem Kommunikationsendgerät (40) und/oder nach dem Anmelden des Blocksaugers (20) an dem Kommunikationsendgerät (40), insbesondere verursacht durch ein von dem Benutzer an dem Kommunikationsendgerät (40) mitgeteilten Startbefehl, das Kommunikationsendgerät (40) ein Prüf-Startsignal zu der Prüfvorrichtung (30) überträgt, um die Prüfvorrichtung (30) aus einem Ruhemodus in einen Messmodus zu versetzten.

4. Verfahren nach einem der vorherigen Ansprüche, wobei das Anmelden des Blocksaugers (20) an dem Kommunikationsendgerät (40) und/oder das Anmelden der Prüfvorrichtung (30) an dem Kommunikationsendgerät (40) eine drahtlose Übertragung eines Identifikationssignals zu dem Kommunikationsendgerät (40) umfasst.

5. Verfahren nach einem der vorherigen Ansprüche, wobei das Anmelden des Blocksaugers (20) an dem Kommunikationsendgerät (40) und/oder das Anmelden der Prüfvorrichtung (30) an dem Kommunikationsendgerät (40) ein Einlesen eines, insbesondere grafisch dargestellten, Identifikationscodes mittels des Kommunikationsendgeräts (40) umfasst.

6. Verfahren nach einem der vorherigen Ansprüche, wobei Anordnen des Blocksaugers (20) an der Prüfvorrichtung (30) in der Prüfkonfiguration umfasst, dass ein Prüf-Werkstück (36) an die Saugstelle (26) angelegt wird.

7. Verfahren nach einem der vorherigen Ansprüche, wobei zur Durchführung der Prüfroutine das Kommunikationsendgerät (40) an den Benutzer Handlungsanweisungen ausgibt, insbesondere anzeigt, wobei die Handlungsanweisungen insbesondere ein Anordnen eines ein Prüf-Werkstücks (36) an der Saugstelle (26) des Blocksaugers (20) und/oder eine Aktivierung oder Deaktivierung der Unterdruckversorgung (24) zur Versorgung mit Betriebs-Unterdruck umfasst.

8. Verfahren nach einem der vorherigen Ansprüche, wobei das Kommunikationsendgerät (40) in einen Prüfmodus dazu eingerichtet ist, den wenigstens einen die Qualitätsinformation repräsentierenden Indikator (56) mittels grafischer Anzeigeelemente (58), insbesondere Icon oder Balkendiagramm, auf einem Display (42) des Kommunikationsendgeräts (40) anzuzeigen.

9. Verfahren nach einem der vorherigen Ansprüche, wobei die Prüfvorrichtung (30) zum Anmelden an dem Kommunikationsendgerät (40) ein Signal über eine erste Signalübertragungseinrichtung (48) überträgt und wobei die Übermittlung der gemessenen Kenngröße über eine zweite Signalübertragungseinrichtung (52) erfolgt, welche von der ersten Signalübertragungseinrichtung (48) verschieden ist.

10. Verfahren nach einem der vorherigen Ansprüche, wobei das Kommunikationsendgerät (40) die Qualitätsinformation und/oder die Kenngröße in einer Speichereinrichtung des Kommunikationsendgeräts (40) hinterlegt und/oder über ein Datenaustausch-Netzwerk (44), insbesondere über das Internet, zu einem Service-Server (46) überträgt.

11. Handhabungsanlage (10) zur Durchführung des Verfahrens nach einem der vorherigen Ansprüche, umfassend:
- ein Unterdruckspannsystem (12) zum Fixieren eines Werkstücks, wobei das Unterdruckspannsystem (12) wenigsten einen Blocksauger (20) und eine Konsole (18) zum Haltern des Blocksaugers (20) sowie eine Unterdruckversorgung (24) zur Versorgung des Blocksaugers (20) mit einem Betriebs-Unterdruck aufweist, wobei der Blocksauger (20) wenigstens eine Saugstelle (26) aufweist und dazu ausgebildet ist, bei Versorgung mit Betriebs-Unterdruck ein an der Saugstelle (26) anliegendes Werkstück anzusaugen und zu fixieren,
- ein, insbesondere mobiles, Kommunikationsendgerät (40) zur Interaktion mit einem Benutzer der Handhabungsanlage (10), wobei das Kommunikationsendgerät (40) Funktionen zur Datenverarbeitung und zur Anzeige von Informationen an den Benutzer bereitstellt, insbesondere mittels eines auf dem Kommunikationsendgerät (40) ablaufenden Computerprogramms (APP);
- eine Prüfvorrichtung (30), an welcher der Blocksauger (20) in einer Prüfkonfiguration gehaltert und mit Betriebs-Unterdruck versorgt werden kann, wobei die Prüfvorrichtung (30) eine Messeinrichtung (38) zur Ermittlung wenigstens einer Kenngröße eines in Prüfkonfiguration gehalterten Blocksaugers (20) aufweist,
wobei das Kommunikationsendgerät (40), die Prüfvorrichtung (30) und der Blocksauger (20) derart eingerichtet sind, dass die Prüfvorrichtung (30) und der Blocksauger (20) an dem Kommunikationsendgerät (40) angemeldet werden können, und wobei die Prüfvorrichtung (30) eine drahtlose Kommunikationsverbindung (54) zum Übertragen eines Datensignals betreffend eine gemessenen Kenngröße an das Kommunikationsendgerät (40) bereitstellt,
wobei das Kommunikationsendgerät (40) dazu eingerichtet ist, aus der Kenngröße eine Qualitätsinformation zu ermitteln und einen die Qualitätsinformation repräsentierenden Indikator (56) anzuzeigen.

12. Handhabungsanlage (10) nach Anspruch 11, wobei die wobei die Prüfvorrichtung (30) einen Halterungsabschnitt (32) für den Blocksauger (20) aufweist und dazu ausgebildet ist, derart an der Konsole (18) angeordnet zu werden, dass ein gehalterter Blocksauger (20) durch die Prüfvorrichtung (30) mit einem Unterdruckverteilersystem (22) der Konsole (28) verbunden ist.

13. Handhabungsanlage (10) nach Anspruch 11 oder 12, wobei die wobei die Prüfvorrichtung (30) eine netzunabhängige Energieversorgung, insbesondere Batterie, aufweist und dazu ausgebildet ist, dem Kommunikationsendgerät (40) eine Ladezustandsinformation betreffend die verfügbare Energie der Energieversorgung zu übermitteln.

## Claims

1. Method for operating a handling system (10),
wherein the handling system (10) comprises:
- a vacuum clamping system (12) for securing a workpiece (4);
wherein the vacuum clamping system (12) comprises at least one suction block (20), a bracket (28) for holding the suction block (20) and a vacuum supply (24) for supplying the suction block (20) with an operating vacuum,
wherein the suction block (20) comprises at least one suction point (26) and is designed to draw in and secure a workpiece located at the suction point (26) when supplied with the operating vacuum,
- a communication terminal (40) for interaction with a user of the handling system (10), wherein the communication terminal (40) provides functions for data processing and for displaying information to the user, in particular by means of a computer program (APP) which runs on the communication terminal;
- a test device (30) on which the suction block (20) can be held in a test configuration and supplied with the operating vacuum,
wherein the test device (30) comprises a measuring apparatus (38) for determining at least one parameter,
wherein the method comprises:
- arranging the suction block (20) on the test device (30) in a test configuration, registering the test device (30) with the communication terminal (40) and registering the suction block (20) with the communication terminal (40);
- performing a test routine, wherein the test device (30) measures at least one parameter of the suction block (20);
- transmitting the measured parameter from the test device (30) to the communication terminal (40) by means of a data signal, in particular via a wireless communication link (54);
- determining quality information from the parameter using the communication terminal (40), in particular by means of the computer program (APP) which runs on the communication terminal (40);
- displaying an indicator representing the quality information (56) by means of the communication terminal.

2. Method according to claim 1, wherein the test routine comprises the measurement of an evacuation time period (T_{A}) as the time period which elapses until the pressure prevailing in the suction point (26) or in a vacuum channel (34) of the test device (30) that supplies the suction point (26) with vacuum has decreased from a first threshold value (p₂) to a second threshold value (p₁).

3. Method according to claim 1 or 2, wherein after the test device (30) is registered with the communication terminal (40) and/or after the suction block (20) is registered with the communication terminal (40), in particular caused by a start command communicated by the user on the communication terminal (40), the communication terminal (40) transmits a test start signal to the test device (30) in order to change the test device (30) from a sleep mode into a measurement mode.

4. Method according to any of the preceding claims, wherein registering the suction block (20) with the communication terminal (40) and/or registering the test device (30) with the communication terminal (40) comprises wirelessly transmitting an identification signal to the communication terminal (40).

5. Method according to any of the preceding claims, wherein registering the suction block (20) with the communication terminal (40) and/or registering the test device (30) with the communication terminal (40) comprises reading an identification code, in particular a graphically presented code, by means of the communication terminal (40).

6. Method according to any of the preceding claims, wherein arranging the suction block (20) on the test device (30) in the test configuration comprises placing a test workpiece (36) at the suction point (26).

7. Method according to any of the preceding claims, wherein, to perform the test routine, the communication terminal (40) issues, in particular displays, instructions to the user, wherein the instructions in particular comprise arranging a a test workpiece (36) at the suction point (26) of the suction block (20) and/or activating or deactivating the vacuum supply (24) for supplying the operating vacuum.

8. Method according to any of the preceding claims, wherein the communication terminal (40) is configured in a test mode to display the at least one indicator (56) representing the quality information by means of graphical display elements (58), in particular an icon or bar chart, on a display (42) of the communication terminal (40).

9. Method according to any of the preceding claims, wherein the test device (30), to register with the communication terminal (40), transmits a signal via a first signal transmission apparatus (48) and wherein the measured parameter is transmitted via a second signal transmission apparatus (52) which is different from the first signal transmission apparatus (48).

10. Method according to any of the preceding claims, wherein the communication terminal (40) stores the quality information and/or the parameter in a storage apparatus of the communication terminal (40) and/or transmits it to a service server (46) via a data exchange network (44), in particular via the Internet.

11. Handling system (10) for performing the method according to any of the preceding claims, comprising:
- a vacuum clamping system (12) for securing a workpiece, wherein the vacuum clamping system (12) comprises at least one suction block (20), a bracket (18) for holding the suction block (20) and a vacuum supply (24) for supplying the suction block (20) with an operating vacuum, wherein the suction block (20) comprises at least one suction point (26) and is designed to draw in and secure a workpiece located at the suction point (26) when supplied with the operating vacuum,
- an, in particular mobile, communication terminal (40) for interaction with a user of the handling system (10), wherein the communication terminal (40) provides functions for data processing and for displaying information to the user, in particular by means of a computer program (APP) which runs on the communication terminal (40);
- a test device (30) on which the suction block (20) can be held in a test configuration and supplied with the operating vacuum,
wherein the test device (30) comprises a measuring apparatus (38) for determining at least one parameter of a suction block (20) held in test configuration,
wherein the communication terminal (40), the test device (30) and the suction block (20) are configured such that the test device (30) and the suction block (20) can be registered with the communication terminal (40), and wherein the test device (30) provides a wireless communication link (54) for transmitting a data signal relating to a measured parameter to the communication terminal (40),
wherein the communication terminal (40) is configured to determine quality information from the parameter and to display an indicator (56) representing the quality information.

12. Handling system (10) according to claim 11, wherein the wherein the test device (30) has a holding portion (32) for the suction block (20) and is designed to be arranged on the bracket (18) such that a held suction block (20) is connected by the test device (30) to a vacuum distribution system (22) of the bracket (28).

13. Handling system (10) according to claim 11 or 12, wherein the wherein the test device (30) has a mains-independent power supply, in particular a battery, and is designed to transmit charge status information relating to the available power of the power supply to the communication terminal (40).

## Revendications

1. Procédé permettant de faire fonctionner une installation de manipulation (10), dans lequel l'installation de manipulation (10) comprend :
- un système de serrage par dépression (12) permettant de fixer une pièce (4) ;
dans lequel le système de serrage par dépression (12) présente au moins un moyen d'aspiration à bloc (20) et une console (28) permettant de maintenir le moyen d'aspiration à bloc (20) ainsi qu'un moyen d'alimentation en dépression (24) permettant d'alimenter le moyen d'aspiration à bloc (20) avec une dépression de fonctionnement,
dans lequel le moyen d'aspiration à bloc (20) présente au moins un emplacement d'aspiration (26) et est conçu pour, lors de l'alimentation en dépression de service, aspirer et fixer une pièce s'appuyant contre l'emplacement d'aspiration (26),
- un terminal de communication (40) pour l'interaction avec un utilisateur de l'installation de manipulation (10), dans lequel le terminal de communication (40) fournit des fonctions pour le traitement de données et pour l'affichage d'informations à l'utilisateur, en particulier au moyen d'un programme informatique (APP) s'exécutant sur le terminal de communication ;
- un dispositif de vérification (30) sur lequel le moyen d'aspiration à bloc (20) peut être maintenu dans une configuration de vérification et alimenté en dépression de fonctionnement,
dans lequel le dispositif de vérification (30) présente un appareil de mesure (38) pour la détermination d'au moins une grandeur caractéristique,
dans lequel le procédé comprend :
- la disposition du moyen d'aspiration à bloc (20) sur le dispositif de vérification (30) dans une configuration de vérification, la connexion du dispositif de vérification (30) au terminal de communication (40) et la connexion du moyen d'aspiration à bloc (20) au terminal de communication (40) ;
- la réalisation d'une routine de vérification, dans lequel le dispositif de vérification (30) mesure au moins une grandeur caractéristique du moyen d'aspiration à bloc (20) ;
- la transmission de la grandeur caractéristique mesurée du dispositif de vérification (30) au terminal de communication (40) au moyen d'un signal de données, en particulier par l'intermédiaire d'une connexion de communication sans fil (54) ;
- la détermination d'informations de qualité à partir de la grandeur caractéristique par le terminal de communication (40), en particulier au moyen du programme informatique (APP) s'exécutant sur le terminal de communication (40) ;
- l'affichage d'un indicateur (56) représentant les informations de qualité au moyen du terminal de communication.

2. Procédé selon la revendication 1, dans lequel la routine de vérification comprend la mesure d'une durée d'évacuation (T_{A}) comme étant la durée qui s'écoule jusqu'à ce que la pression régnant dans l'emplacement d'aspiration (26) ou dans un canal de dépression (34) du dispositif de vérification (30) alimentant l'emplacement d'aspiration (26) en dépression soit tombée d'une première valeur seuil (p₂) à une seconde valeur seuil (p₁).

3. Procédé selon la revendication 1 ou 2, dans lequel, après la connexion du dispositif de vérification (30) au terminal de communication (40) et/ou après la connexion du moyen d'aspiration à bloc (20) au terminal de communication (40), en particulier provoquées par une instruction de démarrage communiquée par l'utilisateur au terminal de communication (40), le terminal de communication (40) transmet un signal de démarrage de vérification au dispositif de vérification (30) afin de faire passer le dispositif de vérification (30) d'un mode de repos à un mode de mesure.

4. Procédé selon l'une des revendications précédentes, dans lequel la connexion du moyen d'aspiration à bloc (20) au terminal de communication (40) et/ou la connexion du dispositif de vérification (30) au terminal de communication (40) comprend une transmission sans fil d'un signal d'identification vers le terminal de communication (40).

5. Procédé selon l'une des revendications précédentes, dans lequel la connexion du moyen d'aspiration à bloc (20) au terminal de communication (40) et/ou la connexion du dispositif de vérification (30) au terminal de communication (40) comprend une lecture d'un code d'identification, en particulier représenté graphiquement, au moyen du terminal de communication (40).

6. Procédé selon l'une des revendications précédentes, dans lequel la disposition du moyen d'aspiration à bloc (20) sur le dispositif de vérification (30) dans la configuration de vérification comprend le fait qu'une pièce à vérifier (36) est appuyée contre l'emplacement d'aspiration (26).

7. Procédé selon l'une des revendications précédentes, dans lequel, pour la réalisation de la routine de vérification, le terminal de communication (40) envoie à l'utilisateur des instructions de manipulation, en particulier les affiche, dans lequel les instructions de manipulation comprennent en particulier une disposition d'une une pièce à vérifier (36) au niveau de l'emplacement d'aspiration (26) du moyen d'aspiration à bloc (20) et/ou une activation ou une désactivation de l'alimentation en dépression (24) pour l'alimentation en dépression de service.

8. Procédé selon l'une des revendications précédentes, dans lequel le terminal de communication (40) est configuré pour, dans un mode de vérification, afficher l'au moins un indicateur (56) représentant les informations de qualité au moyen d'éléments d'affichage graphiques (58), en particulier une icône ou un diagramme à barres, sur un écran (42) du terminal de communication (40).

9. Procédé selon l'une des revendications précédentes, dans lequel le dispositif de vérification (30) transmet un signal par l'intermédiaire d'un premier appareil de transmission de signal (48) pour la connexion au terminal de communication (40), et dans lequel la transmission de la grandeur caractéristique mesurée est effectuée par l'intermédiaire d'un second appareil de transmission de signal (52) qui est différent du premier appareil de transmission de signal (48).

10. Procédé selon l'une des revendications précédentes, dans lequel le terminal de communication (40) enregistre les informations de qualité et/ou la grandeur caractéristique dans un appareil de mémorisation du terminal de communication (40) et/ou les transmet à un serveur de service (46) par l'intermédiaire d'un réseau d'échange de données (44), en particulier par l'intermédiaire d'Internet.

11. Installation de manipulation (10) pour la réalisation du procédé selon l'une des revendications précédentes, comprenant :
- un système de serrage par dépression (12) pour la fixation d'une pièce, dans laquelle le système de serrage par dépression (12) présente au moins un moyen d'aspiration à bloc (20) et une console (18) pour le maintien du moyen d'aspiration à bloc (20) ainsi qu'un moyen d'alimentation en dépression (24) pour l'alimentation du moyen d'aspiration à bloc (20) avec une dépression de fonctionnement, dans laquelle le moyen d'aspiration à bloc (20) présente au moins un emplacement d'aspiration (26) et est conçu pour aspirer et fixer une pièce s'appuyant contre l'emplacement d'aspiration (26) lors de l'alimentation en dépression de fonctionnement,
- un terminal de communication (40), en particulier mobile, pour l'interaction avec un utilisateur de l'installation de manipulation (10), dans laquelle le terminal de communication (40) fournit des fonctions pour le traitement de données et pour l'affichage d'informations à l'utilisateur, en particulier au moyen d'un programme informatique (APP) s'exécutant sur le terminal de communication (40) ;
- un dispositif de vérification (30) sur lequel le moyen d'aspiration à bloc (20) peut être maintenu dans une configuration de vérification et alimenté en dépression de fonctionnement,
dans laquelle le dispositif de vérification (30) présente un appareil de mesure (38) pour la détermination d'au moins une grandeur caractéristique d'un moyen d'aspiration à bloc (20) maintenu dans une configuration de vérification,
dans laquelle le terminal de communication (40), le dispositif de vérification (30) et le moyen d'aspiration à bloc (20) sont configurés de telle sorte que le dispositif de vérification (30) et le moyen d'aspiration à bloc (20) peuvent être connectés au terminal de communication (40), et dans laquelle le dispositif de vérification (30) fournit une connexion de communication sans fil (54) pour la transmission d'un signal de données concernant une grandeur caractéristique mesurée au terminal de communication (40),
dans laquelle le terminal de communication (40) est configuré pour déterminer des informations de qualité à partir de la grandeur caractéristique et pour afficher un indicateur (56) représentant les informations de qualité.

12. Installation de manipulation (10) selon la revendication 11, dans laquelle le dans laquelle le dispositif de vérification (30) présente une section de maintien (32) pour le moyen d'aspiration à bloc (20) et est conçu pour être disposé sur la console (18) de telle sorte qu'un moyen d'aspiration à bloc (20) maintenu est relié à un système de distribution de dépression (22) de la console (28) au moyen du dispositif de vérification (30).

13. Installation de manipulation (10) selon la revendication 11 ou 12, dans laquelle le dans laquelle le dispositif de vérification (30) présente un moyen d'alimentation en énergie indépendant du réseau, en particulier une batterie, et est configuré pour transmettre au terminal de communication (40) des informations d'état de charge concernant l'énergie disponible du moyen d'alimentation en énergie.
